# EUROPEAN PATENT APPLICATION

(11) **EP 4 213 260 A1**
(43) Date of publication of application: **19.07.2023**
(21) Application number: 21866304.5
(22) Date of filing: 21.05.2021
(51) Int. Cl.: H01M 10/052, H01M 10/0567, H01M 10/0569

(54) **LITHIUM SECONDARY BATTERY**

(30) Priority: 14.09.2020 WO PCT/JP2020/034710; 06.04.2021 WO PCT/JP2021/014610
(71) Applicant: TERAWATT TECHNOLOGY K.K., Yokohama-shi, Kanagawa 226-0026 (JP)
(72) Inventor: ARAI, Juichi, Yokohama-shi, Kanagawa 226-0026 (JP); OGATA, Ken, Yokohama-shi, Kanagawa 226-0026 (JP)
(74) Representative: Mewburn Ellis LLP
(86) International application number: PCT/JP2021/019331
(87) International publication number: WO 2022/054343

(57) **Abstract**

The present invention provides a lithium secondary battery that has high energy density and excellent cycle characteristics. The present invention provides a lithium secondary battery including: a positive electrode; a separator; a negative electrode that is free of a negative electrode active material; and an electrolytic solution,
in which the electrolytic solution contains one or more fluorine solvents selected from ether compounds represented by Chemical Formulae (A) to (D). 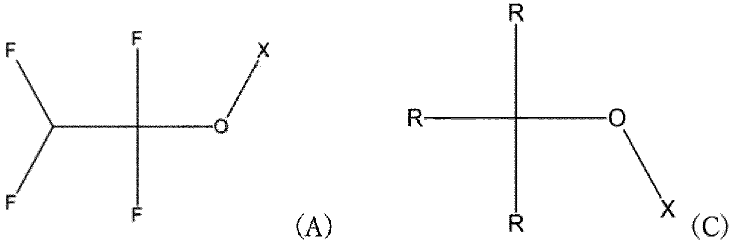 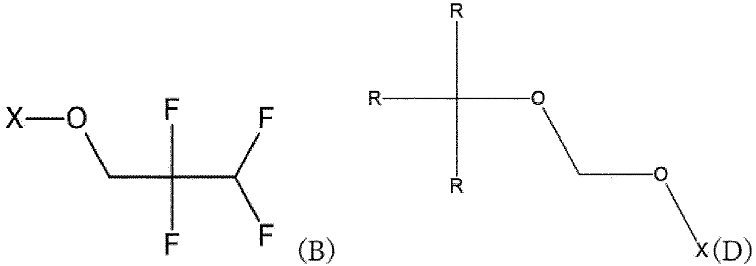 (in the formulae, each R independently represents any of H, F, or a fluorinated alkyl group having 1 to 3 carbon atoms, that is fully or partially fluorinated, and X represents a monovalent group)

## Description

### Technical Field

The present invention relates to a lithium secondary battery.

### Background Art

In recent years, techniques for converting natural energy such as solar power or wind power into electric energy have attracted more attention. Accordingly, various secondary batteries have been developed as power storage devices that are safe and that can store a large amount of electric energy.

Among these, lithium secondary batteries that charge and discharge by transferring lithium ions between a positive electrode and a negative electrode are known to have a high voltage and high energy density. As a typical lithium secondary battery, a lithium ion secondary battery (LIB) that contains an active material capable of retaining a lithium element in the positive electrode and the negative electrode, and that charge and discharge by exchanging lithium ions between the positive electrode active material and the negative electrode active material is known.

For the purpose of realizing high energy density, a lithium secondary battery (lithium metal battery, LMB) that lithium metal is used as the negative electrode active material, instead of a material into which the lithium ion can be inserted, such as a carbon material, has been developed. For example, Patent Document 1 discloses a rechargeable battery using, as a negative electrode, an electrode based on lithium metal.

For the purpose of further improving high energy density and improving productivity, or the like, a lithium secondary battery using a negative electrode that is free of a negative electrode active material such as the carbon material and the lithium metal has been developed. For example, Patent Document 2 discloses a lithium secondary battery containing a positive electrode, a negative electrode, a separation film interposed between the electrodes, and an electrolyte, in which, in the negative electrode, metal particles are formed on a negative electrode current collector and are moved from the positive electrode by charging to form lithium metal on the negative electrode current collector in the negative electrode. Patent Document 2 discloses that this lithium secondary battery can solve problems caused by the reactivity of lithium metal and problems that occur during the assembly process, and has improved performance and a longer service life.

### Citation List

### Patent Documents

Patent Document 1: PCT Japanese Translation Patent Publication No. 2006-500755
Patent Document 2: PCT Japanese Translation Patent Publication No. 2019-505971

### Summary

### Technical Problem

When the present inventors studied batteries of the prior art including those described in the patent documents mentioned above, they found that at least one of energy density or cycle characteristics was insufficient.

For example, in the lithium secondary battery that includes a negative electrode containing the negative electrode active material, due to the volume or mass occupied by the negative electrode active material, it is difficult to sufficiently increase the energy density and a capacity. In addition, even in an anode free lithium secondary battery of the prior art, that includes a negative electrode not containing a negative electrode active material, due to repeated charging and discharging, a dendritic lithium metal is likely to be formed on a surface of the negative electrode, which is likely to cause short circuiting and a decrease in capacity, resulting in insufficient cycle characteristics.

With regard to the anode free lithium secondary battery, a method has also been developed of applying a large amount of physical pressure to the battery to keep an interface between the negative electrode and a separator under high pressure, so that uneven growth is suppressed during lithium metal deposition. However, because a large mechanical mechanism is required to apply such a high level of pressure, the weight and volume of the battery increase as a whole, and the energy density decreases.

In view of these problems, it is an object of the present invention to provide a lithium secondary battery having high energy density and excellent cycle characteristics.

### Solution to Problem

One aspect of the present invention is a lithium secondary battery including: a positive electrode; a separator; a negative electrode that is free of a negative electrode active material; and an electrolytic solution, in which the electrolytic solution contains one or more fluorine solvents selected from ether compounds represented by Chemical Formulae (A) to (D). 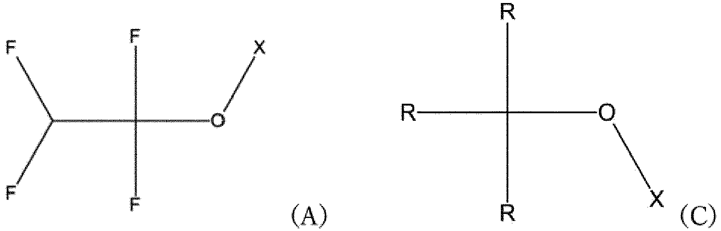 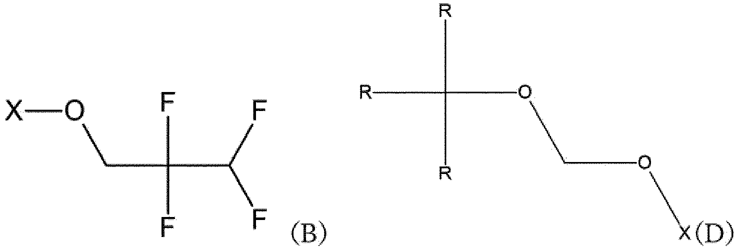 (in the formulae, each R independently represents any of H, F, or a fluorinated alkyl group having 1 to 3 carbon atoms, that is fully or partially fluorinated, and X represents a monovalent group)

Because this lithium secondary battery includes a negative electrode that is free of a negative electrode active material, charging and discharging are performed by depositing lithium metal on the surface of the negative electrode and electrolytically dissolving the deposited lithium metal. As a result, energy density is improved.

The present inventors have found that, in a lithium secondary battery that contains, in the electrolytic solution, a fluorine solvent represented by Chemical Formulae (A) to (D) described above, a solid electrolyte interphase layer ("SEI layer") is easily formed on the surface of the negative electrode. Because the SEI layer has ionic conductivity, reactivity of lithium deposition reaction on the surface of the negative electrode, on which the SEI layer is formed, is uniform in a planar direction of the surface of the negative electrode. Therefore, in the lithium secondary battery described above, the growth of the dendritic lithium metal on the negative electrode is suppressed, and the cycle characteristics are excellent.

### Advantageous Effects of Invention

The present invention can provide a lithium secondary battery having high energy density and excellent cycle characteristics.

### Brief Description of Drawings

Fig. 1 is a schematic cross-sectional view of the lithium secondary battery in the embodiment of the present invention.
Fig. 2 is a schematic cross-sectional view of the lithium secondary battery in the embodiment of the present invention during use.

### Description of Embodiments

Embodiments of the present invention ("embodiments") will now be described with reference to the drawings when necessary. In the drawings, identical elements are designated by the same reference numbers, and redundant descriptions of these elements have been omitted. Positional relationships such as up, down, left, and right are based on the positional relationship shown in the drawings unless otherwise specified. The dimensional ratios shown in the drawings are not limited to the depicted ratios.

### (Lithium Secondary Battery)

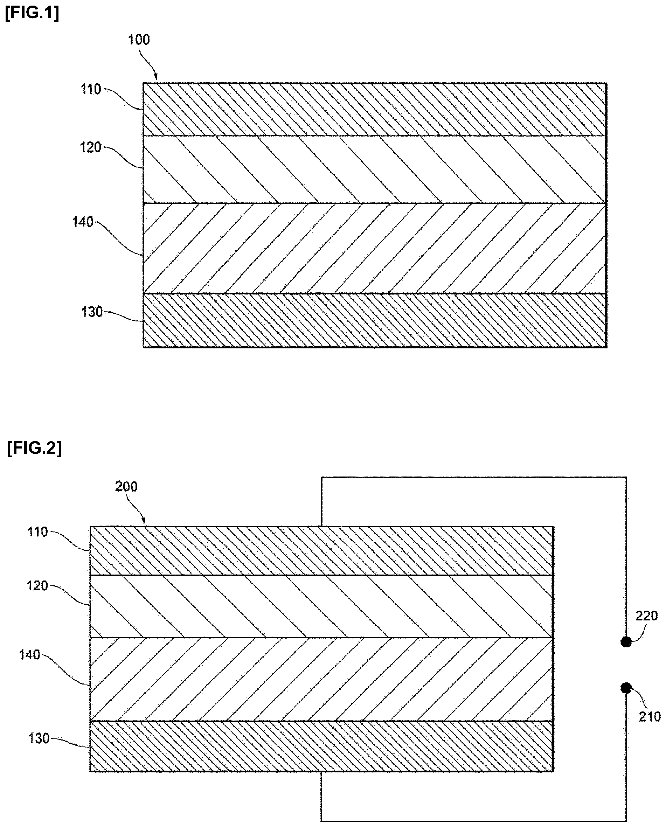

Fig. 1 is a schematic cross-sectional view of the lithium secondary battery in the embodiment of the present invention. The lithium secondary battery 100 in the embodiment includes a positive electrode 120 and a negative electrode 130 that is free of a negative electrode active material. In addition, in the lithium secondary battery 100, a positive electrode current collector 110 is disposed on a side of the positive electrode 120, opposite to a surface facing the negative electrode 130, and a separator 140 is disposed between the positive electrode 120 and the negative electrode 130.

Hereinafter, each configuration of the lithium secondary battery 100 will be described.

### (Negative Electrode)

The negative electrode 130 is free of a negative electrode active material. In the present specification, the "negative electrode active material" is a substance that causes an electrode reaction, that is, an oxidation reaction and a reduction reaction at the negative electrode. Specifically, examples of the negative electrode active material include lithium metal and a host material for a lithium element (lithium ions or lithium metal). The host material for the lithium element means a material provided to retain the lithium ions or the lithium metal in the negative electrode. Examples of retaining mechanisms include, but are not limited to, intercalation, alloying, and occlusion of metallic clusters, and intercalation is typically used.

In the lithium secondary battery in the embodiment, because the negative electrode is free of a negative electrode active material before initial charging of the battery, charging and discharging are performed by depositing lithium metal on the negative electrode and electrolytically dissolving the deposited lithium metal. Therefore, in the lithium secondary battery in the embodiment, the volume occupied by the negative electrode active material and the mass of the negative electrode active material are reduced as compared with a lithium secondary battery containing the negative electrode active material, and the volume and mass of the entire battery are small, so that the energy density is high in principle.

In the lithium secondary battery in the embodiment, the negative electrode does not contain a negative electrode active material before initial charging of the battery, lithium metal is deposited on the negative electrode when the battery is charged, and the deposited lithium metal is electrolytically dissolved when the battery is discharged. Therefore, in the lithium secondary battery in the embodiment, the negative electrode is substantially free of the negative electrode active material even at the end of discharging of the battery. Therefore, in the lithium secondary battery in the embodiment, the negative electrode acts as a negative electrode current collector.

In a case where the lithium secondary battery in the embodiment is compared with a lithium ion battery (LIB) and a lithium metal battery (LMB), the following points are different.

In the lithium ion battery (LIB), a negative electrode contains a host material for a lithium element (lithium ions or lithium metal), this material is filled with the lithium element when the battery is charged, and the host material releases the lithium element, thereby discharging the battery. The LIB is different from the lithium secondary battery in the embodiment in that the negative electrode contains the host material for the lithium element.

The lithium metal battery (LMB) is produced by using, as a negative electrode, an electrode having lithium metal on its surface or a single lithium metal. That is, the LMB is different from the lithium secondary battery in the embodiment in that the negative electrode contains the lithium metal, that is the negative electrode active material, immediately after assembling the battery, that is, before initial charging of the battery. The LMB uses the electrode containing lithium metal having high flammability and reactivity in its production. However, because the lithium secondary battery in the embodiment uses the negative electrode free of lithium metal, the lithium secondary battery in the embodiment is more safe and productive.

In the present specification, the negative electrode "free of a negative electrode active material" means the negative electrode does not contain the negative electrode active material or does not substantially contain the negative electrode active material. The fact that the negative electrode does not substantially contain the negative electrode active material means the amount of the negative electrode active material in the negative electrode is 10% by mass or less relative to the overall mass of the negative electrode. The amount of negative electrode active material in the negative electrode relative to the overall mass of the negative electrode is preferably 5.0% by mass or less relative to the overall mass of the negative electrode, and may be 1.0% by mass or less, 0.1% by mass or less, or 0.0% by mass or less. Since the negative electrode does not contain the negative electrode active material or the amount of the negative electrode active material in the negative electrode is within the above-described range, the energy density of the lithium secondary battery 100 is high.

In the present specification, the "lithium metal is deposited on the negative electrode" means the lithium metal is deposited on the surface of the negative electrode or on at least one surface of a solid electrolyte interphase (SEI) layer formed on the surface of the negative electrode, which will be described later. For example, in Fig. 1, the lithium metal is deposited on the surface of the negative electrode 130 (an interface between the negative electrode 130 and the separator 140).

In the present specification, the "before initial charging" of the battery means a state from the time when the battery is assembled to the time when the battery is first charged. In addition, "at the end of discharging" of the battery means a state in which no discharge occurs even in a case where a battery voltage is lowered any further, and the battery voltage at that case is, for example, 1.0 V or more and 3.8 V or less, preferably 1.0 V or more and 3.0 V or less.

In the present specification, the "lithium secondary battery including a negative electrode free of a negative electrode active material" means the negative electrode is free of the negative electrode active material before initial charging of the battery or at the end of discharging of the battery. Therefore, the phrase "negative electrode free of a negative electrode active material" may be rephrased as "negative electrode free of a negative electrode active material before initial charging of the battery or at the end of discharging of the battery", "negative electrode that does not contain a negative electrode active material other than lithium metal regardless of the state of charge of the battery and does not contain the lithium metal before initial charging or at the end of discharging", "negative electrode current collector free of lithium metal before initial charging or at the end of discharging", or the like. Alternatively, in the above-described phrase, the "before initial charging or at the end of discharging" may be replaced with the phrase "before initial charging". In addition, the "lithium secondary battery including a negative electrode free of a negative electrode active material" may be rephrased as an anode free lithium battery, a zero anode lithium battery, or an anodeless lithium battery.

In the negative electrode in the embodiment, regardless of the state of charge of the battery, the amount of the negative electrode active material other than lithium metal is 10% by mass or less relative to the overall mass of the negative electrode, preferably 5.0% by mass or less, and may be 1.0% by mass or less, 0.1% by mass or less, or 0.0% by mass or less.

In addition, in the negative electrode in the embodiment, before initial charging or at the end of discharging, the amount of lithium metal is 10% by mass or less relative to the overall mass of the negative electrode, preferably 5.0% by mass or less, and may be 1.0% by mass or less, 0.1% by mass or less, or 0.0% by mass or less. In the negative electrode, before initial charging or at the end of discharging, the amount of lithium metal is preferably 10% by mass or less relative to the overall mass of the negative electrode (among these, the amount of lithium metal is preferably 5.0% by mass or less relative to the overall mass of the negative electrode, and may be 1.0% by mass or less, 0.1% by mass or less, or 0.0% by mass or less).

In the lithium secondary battery in the embodiment, in a case where the battery voltage is 1.0 V or more and 3.5 V or less, the amount of lithium metal may be 10% by mass or less relative to the overall mass of the negative electrode (preferably 5.0% by mass or less, and may be 1.0% by mass or less, 0.1% by mass or less, or 0.0% by mass or less); in a case where the battery voltage is 1.0 V or more and 3.0 V or less, the amount of lithium metal may be 10% by mass or less relative to the overall mass of the negative electrode (preferably 5.0% by mass or less, and may be 1.0% by mass or less, 0.1% by mass or less, or 0.0% by mass or less); or in a case where the battery voltage is 1.0 V or more and 2.5 V or less, the amount of lithium metal may be 10% by mass or less relative to the overall mass of the negative electrode (preferably 5.0% by mass or less, and may be 1.0% by mass or less, 0.1% by mass or less, or 0.0% by mass or less).

In the lithium secondary battery in the embodiment, a ratio M_{3.0}/M_{4.2} of a mass M_{3.0} of lithium metal deposited on the negative electrode in a state in which the battery voltage is 3.0 V to a mass M_{4.2} of lithium metal deposited on the negative electrode in a state in which the battery voltage is 4.2 V is preferably 20% or less, more preferably 15% or less, and even more preferably 10% or less. The ratio M_{3.0}/M_{4.2} may be 8.0% or less, 5.0% or less, 3.0% or less, or 1.0% or less.

Examples of negative electrode active materials include lithium metal, alloys containing lithium metal, carbon-based substances, metal oxides, metals alloyed with lithium, and alloys containing the metals. Carbon-based substances include, but are not limited to, graphene, graphite, hard carbon, mesoporous carbon, carbon nanotubes, and carbon nanohorns. Examples of metal oxides include, but are not limited to, titanium oxide-based compounds, tin oxide-based compounds, and cobalt oxide-based compounds. Examples of metals alloyed with lithium include silicon, germanium, tin, lead, aluminum, and gallium.

There are no particular restrictions on the negative electrode in the embodiment as long as it does not contain a negative electrode active material and can be used as a current collector. Examples of the negative electrode in the embodiment include at least one selected from the group consisting of metals such as Cu, Ni, Ti, Fe, and other metals that do not react with Li, alloys of these metals, and stainless steel (SUS). When SUS is used as the negative electrode, any well-known type of SUS can be used. The negative electrode materials mentioned above may be used alone or in combinations of two or more. In the present specification, the "metal that does not react with Li" refers to a metal that does not react with lithium ions or lithium metal to form an alloy under the operating conditions of the lithium secondary battery.

The negative electrode in the embodiment is preferably at least one selected from the group consisting of Cu, Ni, Ti, Fe, alloys of these metals, and stainless steel (SUS), and more preferably at least one selected from the group consisting of Cu, Ni, alloys of these metals, and stainless steel (SUS). The negative electrode is even more preferably Cu, Ni, alloys of these metals, or stainless steel (SUS). When this negative electrode is used, the energy density and productivity of the battery tend to be further improved.

The average thickness of the negative electrode in the embodiment is preferably 4 µm or more and 20 µm or less, more preferably 5 µm or more and 18 µm or less, and even more preferably 6 µm or more and 15 µm or less. Because the volume occupied by the negative electrode in the battery is reduced in this aspect of the present invention, the energy density of the battery is further improved.

### (Positive Electrode)

The positive electrode 120 is not particularly limited as long as it is a positive electrode commonly used in a lithium secondary battery, and a known material can be selected as needed, depending on the use of the lithium secondary battery. From the standpoint of increasing the stability and output voltage of the battery, the positive electrode 120 preferably contains a positive electrode active material.

In the present specification, the "positive electrode active material" is a substance that causes an electrode reaction, that is, an oxidation reaction and a reduction reaction at the positive electrode. Specifically, examples of the positive electrode active material in the embodiment include a host material for a lithium element (typically, lithium ions).

Examples of positive electrode active materials include, but are not limited to, metal oxides and metal phosphates. Examples of metal oxides include, but are not limited to, cobalt oxide-based compounds, manganese oxide-based compounds, and nickel oxide-based compounds. Examples of metal phosphates include, but are not limited to, iron phosphate-based compounds and cobalt phosphate-based compounds. Typical examples of positive electrode active materials include LiCoO₂, LiNiₓCo_{y}Mn_{z}O (x + y + z = 1), LiNiₓCo_{y}Al_{z}O (x + y + z = 1), LiNiₓMn_{y}O (x + y = 1), LiNiO₂, LiMn₂O₄, LiFePO, LiCoPO, LiFeOF, LiNiOF, and LiTiS₂. The positive electrode active materials mentioned above can be used alone or in combinations of two or more.

The positive electrode 120 may contain components other than the positive electrode active material. Examples of these components include, but are not limited to, commonly used conductive aids, binders, and polymer electrolytes.

Examples of conductive aids that can be used in the positive electrode 120 include, but are not limited to, carbon black, single-wall carbon nanotubes (SWCNT), multi-wall carbon nanotubes (MWCNT), carbon nanofibers (CF), and acetylene black. Examples of binders include, but are not limited to, polyvinylidene fluoride, polytetrafluoroethylene, styrene butadiene rubber, acrylic resins, and polyimide resins.

The amount of the positive electrode active material in the positive electrode 120 may be, for example, 50% by mass or more and 100% by mass or less relative to the overall mass of the positive electrode 120. The amount of the conductive aid in the positive electrode 120 may be, for example, 0.5% by mass or more and 30% by mass or less relative to the overall mass of the positive electrode 120. The amount of the binder in the positive electrode 120 may be, for example, 0.5% by mass or more and 30% by mass or less relative to the overall mass of the positive electrode 120. The amount of the polymer electrolyte in the positive electrode 120 may be, for example, 0.5% by mass or more and 30% by mass or less relative to the overall mass of the positive electrode 120.

### (Positive Electrode Current Collector)

The positive electrode current collector 110 is disposed on one side of the positive electrode 120. The positive electrode current collector 110 is not particularly limited as long as it is a conductor that does not react with lithium ions in the battery. Examples of such a positive electrode current collector include aluminum.

The average thickness of the positive electrode current collector 110 is preferably 4 µm or more and 20 µm or less, more preferably 5 µm or more and 18 µm or less, and even more preferably 6 µm or more and 15 µm or less. In this aspect of the present invention, because the volume occupied by the positive electrode current collector 110 in the lithium secondary battery 100 is reduced, the energy density of the lithium secondary battery 100 is further improved.

### (Separator)

The separator 140 is the component that separates the positive electrode 120 and the negative electrode 130 to prevent short circuiting of the battery, while maintaining conductivity of the lithium ions serving as the charge carrier between the positive electrode 120 and the negative electrode 130. The separator 140 consists of a material that does not have electronic conductivity and that does not react with lithium ions. The separator 140 also plays a role in retaining the electrolytic solution. Although the material itself constituting the separator does not have ionic conductivity, the separator retains the electrolytic solution so that the lithium ions are conducted through the electrolytic solution. There are no particular restrictions on the separator 140 as long as it can play this role. The separator 140 can be composed of a porous organic film, preferably composed of a porous polymer film, for example, a polyethylene (PE) film, a polypropylene (PP) film, or a laminated structure thereof.

The separator 140 may be coated with a separator coating layer. The separator coating layer can be applied to one or both sides of the separator 140. The separator coating layer is not particularly limited as long as it does not react with lithium ions. The separator coating layer preferably bonds the separator 140 to the adjacent layer firmly. Examples of such a separator coating layer include, but are not limited to, for example, a layer containing a binder such as polyvinylidene fluoride (PVDF), styrene butadiene rubber and carboxymethyl cellulose (SBR-CMC) mixtures, polyacrylic acid (PAA), lithium polyacrylate (Li-PAA), polyimide (PI), polyamideimide (PAI), and aramids. The separator coating layer may contain inorganic particles such as silica, alumina, titania, zirconia, magnesium oxide, magnesium hydroxide, and lithium nitrate in the above-described binder. The separator 140 may be a separator having no separator coating layer, or a separator having the separator coating layer.

The average thickness of the separator 140 is preferably 30 µm or less, more preferably 25 µm or less, and even more preferably 20 µm or less. Because the volume occupied by the separator 140 in the lithium secondary battery 100 is reduced in this aspect of the present invention, the energy density of the lithium secondary battery 100 is further improved. The average thickness of the separator 140 is also preferably 5 µm or more, more preferably 7 µm or more, and even more preferably 10 µm or more. In this aspect of the present invention, the positive electrode 120 and the negative electrode 130 can be separated more reliably, and short circuiting of the battery can be further suppressed.

### (Electrolytic Solution)

The lithium secondary battery 100 contains an electrolytic solution. The electrolytic solution is a solution that contains an electrolyte and a solvent and has ionic conductivity, and acts as a conductive path for lithium ions. In the lithium secondary battery 100, the electrolytic solution may be impregnated in the separator 140 or may be sealed together with a laminate of the positive electrode current collector 110, the positive electrode 120, the separator 140, and the negative electrode 130 inside a sealed container. The electrolytic solution is a solution that contains an electrolyte and a solvent and has ionic conductivity, and acts as a conductive path for lithium ions. Therefore, in the aspect including the electrolytic solution, an internal resistance of the battery is further reduced, and the energy density, capacity, and cycle characteristics are further improved.

In an anode free lithium secondary battery containing the electrolytic solution, a solid electrolyte interphase layer (SEI layer) is formed on a surface of the negative electrode or the like by decomposing the solvent or the like in the electrolytic solution. Due to the SEI layer in the lithium secondary battery, further decomposition of components in the electrolytic solution, irreversible reduction of lithium ions caused by the decomposition, generation of gas, and the like are suppressed. In addition, because the SEI layer has ionic conductivity, reactivity of lithium metal deposition reaction on the surface of the negative electrode, on which the SEI layer is formed, is uniform in a planar direction of the surface of the negative electrode. When a specific fluorine solvent is used in the lithium secondary battery 100, the SEI layer is easily formed on the surface of the negative electrode, and the growth of dendritic lithium metal on the negative electrode is further suppressed. As a result, the cycle characteristics tend to be further improved.

In the present specification, a compound "contained as a solvent" means, in the usage environment of lithium secondary batteries, it is sufficient that the compound alone or a mixture of the compound with other compounds is a liquid, and furthermore, it is sufficient that the electrolyte can be dissolved to form an electrolytic solution in a solution phase.

In the embodiment, the electrolytic solution contains one or more fluorine solvents selected from ether compounds represented by Chemical Formulae (A) to (D).

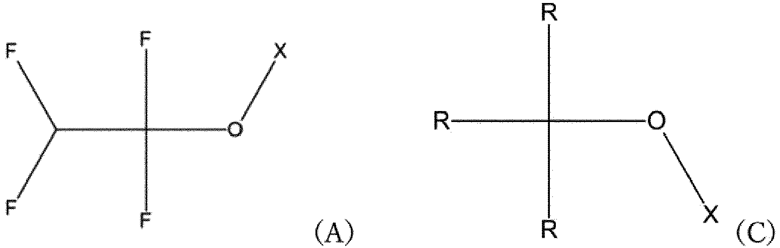

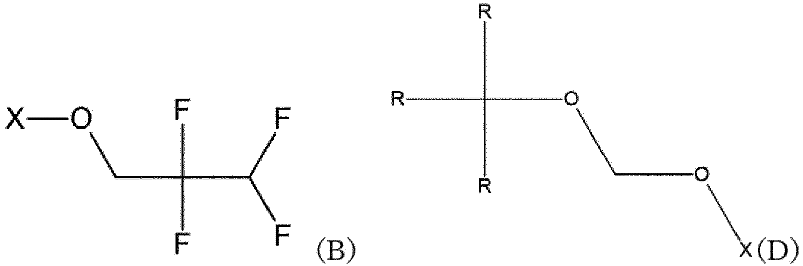

In the formulae,
each R independently represents any of H, F, or a fluorinated alkyl group having 1 to 3 carbon atoms, that is fully or partially fluorinated, and
X represents a monovalent group.
X is preferably an alkyl group having 1 to 7 carbon atoms or a fluorinated alkyl group having 1 to 7 carbon atoms, that is fully or partially fluorinated.

The reason why, due to the fluorinated ether compounds represented by Chemical Formulae (A) to (D), the SEI layer is easily formed on the surface of the negative electrode, the growth of dendritic lithium metal on the negative electrode is further suppressed, and as a result, the cycle characteristics are improved is not exactly clear, but the following reason is considered.

The fluorinated ether compound (solvent) is reduced in competition with the deposition reaction of Li ions or reacts with Li to form continuous or discontinuous SEI layers as reaction products on the surface of the negative electrode. This SEI layer is believed to act repulsively with respect to a hydrocarbon solvent to which the Li ions are solvated, and it is presumed that this suppresses the continuous or intermittent decomposition of the hydrocarbon solvent, smoothes desorption of the Li ions during deposition, and relaxes solvation potential of Li metal during dissolution reaction.

Surprisingly, it is found that the SEI layer formed in the lithium secondary battery 100, that contains the above-described fluorine compound, has higher ionic conductivity than SEI layers formed in lithium secondary batteries of the prior art. It is presumed that this is because the amount of fluorine in the formed SEI layer is high, so that the transferring path of the lithium ions in the SEI layer is increased or expanded. However, the suppressive factors are not limited to these.

Examples of ether compounds having the structures of both of Chemical Formulae (A) and (B) include 1,1,2,2-tetrafluoroethyl-2,2,3,3-tetrafluoropropyl ether (TTFE), 1,1,2,2-tetrafluoroethyl-2,2,3,3,-tetrafluoropropyl diethoxymethane, and 1,1,2,2-tetrafluoroethyl- 2,2,3,3-tetrafluoropropyl diethoxypropane. From the standpoint of effectively and reliably exhibiting the effects of fluorinated alkyl compound mentioned above, 1,1,2,2-tetrafluoroethyl-2,2,3,3-tetrafluoropropyl ether is preferable as a fluorine solvent AB.

Examples of the ether compound represented by Chemical Formula (A) include 1,1,2,2-tetrafluoroethyl-2,2,2-trifluoroethyl ether (TFEE), methyl-1,1,2,2-tetrafluoroethyl ether, ethyl-1,1,2,2-tetrafluoroethyl ether, propyl-1,1,2,2-tetrafluoroethyl ether, 1H,1H,5H-perfluoropentyl-1,1,2,2-tetrafluoroethyl ether, and 1H,1H,5H-octafluoropentyl-1,1,2,2-tetrafluoroethyl ether. From the standpoint of effectively and reliably exhibiting the effects of fluorinated alkyl compound mentioned above, 1,1,2,2-tetrafluoroethyl-2,2,2-trifluoroethyl ether, methyl-1,1,2,2-tetrafluoroethyl ether, ethyl-1,1,2,2-tetrafluoroethyl ether, or 1H,1H,5H-octafluoropentyl-1,1,2,2-tetrafluoroethyl ether is preferable as a fluorine solvent A.

Examples of the ether compound represented by Chemical Formula (B) include difluoromethyl-2,2,3,3-tetrafluoropropyl ether, trifluoromethyl-2,2,3,3-tetrafluoropropyl ether, fluoromethyl-2,2,3,3-tetrafluoropropyl ether, and methyl-2,2,3,3-tetrafluoropropyl ether. From the standpoint of effectively and reliably exhibiting the effects of fluorinated alkyl compound mentioned above, difluoromethyl-2,2,3,3-tetrafluoropropyl ether is preferable as a fluorine solvent B.

Chemical Formulae of TTFE and TFEE that can be preferably used as the ether compound represented by Chemical Formula (A) or the ether compound represented by Chemical Formula (B) are shown below.

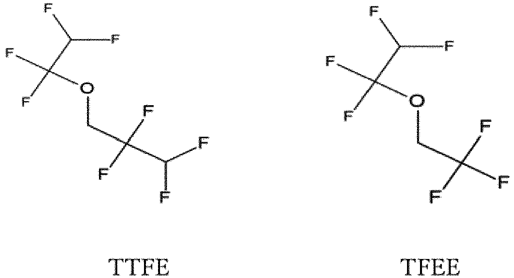

As the ether compound represented by Chemical Formula (C), any of compounds represented by Chemical Formulae (C1) to (C5) below can be used. As the fluorinated ether solvent of Chemical Formula (1), a fluorinated ether solvent having a branched chain is particularly preferable, and for example, a fluorinated ether solvent represented by Chemical Formula (C1) or (C2) below is preferably used.

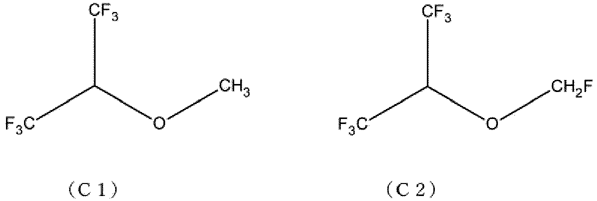

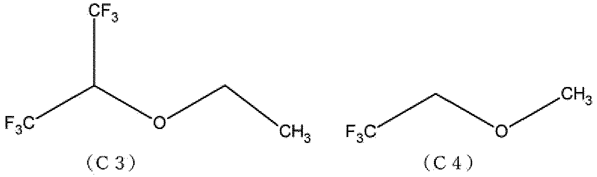

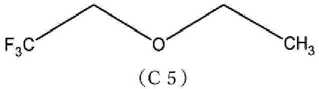

As the fluorinated diether solvent of Chemical Formula (D), any of fluorinated diether solvents represented by Chemical Formulae (D1) and (D2) can be used.

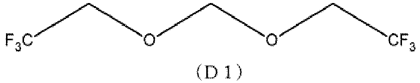

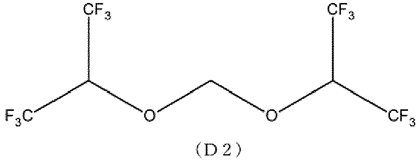

The electrolytic solution may contain other fluorine solvents. Examples of these fluorine solvents include methyl nonafluorobutyl ether, ethyl nonafluorobutyl ether, 1,1,1,2,2,3,4,5,5,5-decafluoro-3-methoxy-4-trifluoromethylpentane, methyl-2,2,3,3,3-pentafluoropropyl ether, 1,1,2,3,3,3-hexafluoropropylmethyl ether, ethyl-1,1,2,3,3,3-hexafluoropropyl ether, and tetrafluoroethyltetrafluoropropyl ether.

It is sufficient that the electrolytic solution contains at least one type of fluorine solvent. From the standpoint of further improving solubility of the electrolyte in the electrolytic solution and from the standpoint that the SEI layer is more easily formed, the electrolytic solution preferably contains two or more types of fluorine solvents.

The amount of the fluorine solvent described above (total of fluorine solvents) is not particularly limited, but is 20% by volume or more or 30% by volume or more relative to the overall amount of solvent components in the electrolytic solution, preferably 40% by volume or more, more preferably 50% by volume or more, even more preferably 60% by volume or more, and still more preferably 70% by volume or more. When the amount of the fluorine solvent is within the above-described range, the SEI layer is more easily formed, so that the cycle characteristics of the battery tend to be further improved. The upper limit of the amount of the fluorine solvent is not particularly limited, and the amount of the fluorine solvent may be 100% by volume or less, 95% by volume or less, 90% by volume or less, or 80% by volume or less relative to the overall amount of the solvent components in the electrolytic solution.

In a case where two types of fluorine solvents are used in combination, the fluorine solvent selected from the ether compound represented by Chemical Formula (A) or (B) and the fluorine solvent selected from the ether compound represented by Chemical Formula (C) or (D) can be preferably used in combination. The proportion in the case where the ether compound represented by Chemical Formula (A) or (B) and the ether compound represented by Chemical Formula (C) or (D) are used in combination is 1:10 to 10:1, preferably 1:5 to 5:1, 1:3 to 3:1, 1:2 to 2:1, or 1:1.

The electrolytic solution preferably contains a non-fluorine solvent that is an ether compound free of a fluorine atom. By containing the non-fluorine solvent, the solubility of the electrolyte in the electrolytic solution is further improved, so that the ionic conductivity in the electrolytic solution is improved. As a result, the cycle characteristics of the lithium secondary battery can be improved. As the non-fluorine solvent, two or more types of ether compounds free of a fluorine atom may be contained. It is more preferable that the ether compound free of a fluorine atom is a polyether compound that includes 2 or more and 5 or less ether bonds. Examples of such an ether compound include, but are not limited to, 1,2-dimethoxyethane (DME), 1,2-dimethoxypropane (DMP), triethylene glycol dimethyl ether (TGM), diethylene glycol dimethyl ether (DGM), tetraethylene glycol dimethyl ether (TetGM), 1,2-dimethoxybutane, 2,3-dimethoxybutane, 1,2-diethoxypropane, 1,2-diethoxybutane, 2,3-diethoxybutane, diethoxyethane, dimethyl ether, acetonitrile, dimethyl carbonate, diethyl carbonate, ethyl methyl carbonate, ethylene carbonate, propylene carbonate, chloroethylene carbonate, methyl acetate, ethyl acetate, propyl acetate, methyl propionate, ethyl propionate, trimethyl phosphate, and triethyl phosphate.

The amount of the non-fluorine solvent (total of fluorine solvents) is not particularly limited, but is 5% by volume or more relative to the overall amount of the solvent components in the electrolytic solution, preferably 10% by volume or more, more preferably 15% by volume or more, and even more preferably 20% by volume or more, and preferably 30% by volume or less.

The electrolyte contained in the electrolytic solution is not particularly limited as long as it is a lithium salt, and examples of the lithium salt include Lil, LiCl, LiBr, LiF, LiBF₄, LiPF₆, LiAsF₆, LiSOsCFs, LiN(SO₂F)₂, LiN(SO₂CF₃)₂, LiN(SO₂CF₃CF₃)₂, LiBF₂(C₂O₄), LiB(O₂C₂H₄)₂, LiB(O₂C₂H₄)F₂, LiB(OCOCF₃)₄, LiNOs, and Li₂SO₄. From the standpoint of further improving the energy density and cycle characteristics of the lithium secondary battery 100, LiN(SO₂F)₂, LiPF₆, or LiBF₂(C₂O₄) is preferable as the lithium salt. In addition, when the electrolytic solution contains at least one of LiN(SO₂F)₂, LiPF₆, or LiBF₂(C₂O₄), the formation and growth of the SEI layer on the surface of the negative electrode are further promoted, and this tends to make it possible to obtain a lithium secondary battery 100 having more excellent cycle characteristics. These lithium salts can be used alone or in combinations of two or more.

The electrolytic solution may further contain a salt other than the lithium salt as the electrolyte. Examples of such a salt include salts of Na, K, Ca, or Mg.

The concentration of the lithium salt in the electrolytic solution is not particularly limited, but is preferably 0.5 M or more, more preferably 0.7 M or more, even more preferably 0.9 M or more, and still more preferably 1.0 M or more. When the concentration of the lithium salt is within the above-described range, the SEI layer is more easily formed and the internal resistance tends to be further lowered. In particular, in the lithium secondary battery 100 containing the fluorine compound as the solvent, the concentration of the lithium salt in the electrolytic solution can be increased, so that the cycle characteristics and rate capability can be further improved. The upper limit of the concentration of the lithium salt is not particularly limited, and the concentration of the lithium salt may be 10.0 M or less, 5.0 M or less, or 2.0 M or less.

The lithium secondary battery in the embodiment may contain the electrolytic solution or the components of the electrolytic solution in a state other than the liquid. For example, by adding an electrolytic solution when preparing the separator described later, a battery can be obtained in which the electrolytic solution is contained in a solid or semi-solid (gel) component. In addition, the electrolytic solution can be rephrased as the electrolyte.

The fact that the electrolytic solution contains the fluorine solvent and the non-fluorine solvent can be confirmed by any method common in the art. Examples of such a method include an NMR measurement method, a mass analysis method such as HPLC-MS, and an IR measurement method.

### (Use of Lithium Secondary Battery)

Fig. 2 illustrates one use aspect of the lithium secondary battery in the embodiment. As the lithium secondary battery 200, a positive electrode terminal 220 and a negative electrode terminal 210 for connecting the lithium secondary battery to an external circuit are connected to the positive electrode current collector 110 and the negative electrode 130 in the lithium secondary battery 100, respectively. The lithium secondary battery 200 is charged and discharged by connecting the negative electrode terminal 210 to one end of the external circuit and connecting the positive electrode terminal 220 to the other end of the external circuit. The external circuit is, for example, a resistor, a power supply, a device, a potentiostat, or the like.

The lithium secondary battery 200 is charged by applying voltage between the positive electrode terminal 220 and the negative electrode terminal 210 so that current flows from the negative electrode terminal 210 to the positive electrode terminal 220 via the external circuit. By charging the lithium secondary battery 200, the lithium metal is deposited on the negative electrode.

In the lithium secondary battery 200, the solid electrolyte interphase layer (SEI layer) may be formed on the surface of the negative electrode 130 (interface between the negative electrode 130 and the separator 140) by a first charging (initial charging) after the battery is assembled. There are no particular restrictions on the SEI layer that is formed, but it may contain, for example, a lithium-containing inorganic compound or a lithium-containing organic compound. The typical average thickness of the SEI layer is 1 nm or more and 10 µm or less.

When the positive electrode terminal 220 and the negative electrode terminal 210 in the charged lithium secondary battery 200 are connected via the external circuit as necessary, the lithium secondary battery 200 is discharged. As a result, the deposition of the lithium metal generated on the negative electrode is electrolytically dissolved.

### (Lithium Secondary Battery Production Method)

There are no particular restrictions on the method used to produce the lithium secondary battery 100 shown in Fig. 1 as long as it can produce a lithium secondary battery with the configuration described above. The following method is an example.

First, the positive electrode 120 is prepared by a known production method or by purchasing a commercially available one. The positive electrode 120 may be produced in the following manner. Such a positive electrode active material as mentioned above, a known conductive aid, and a known binder are mixed together to obtain a positive electrode mixture. The mixing ratio may be, for example, 50% by mass or more and 99% by mass or less of the positive electrode active material, 0.5% by mass or more and 30% by mass or less of the conductive aid, and 0.5% by mass or more and 30% by mass or less of the binder relative to the entire mass of the positive electrode mixture. The resulting positive electrode mixture is applied to one side of a metal foil (for example, Al foil) as a positive electrode current collector, that has a predetermined thickness (for example, 5 µm or more and 1 mm or less), and then press-molded. The resulting molded material is punched to a predetermined size to obtain a positive electrode 120 formed on a positive electrode current collector 110.

Next, the negative electrode 130 can be prepared by washing the negative electrode material described above, such as a metal foil (for example, an electrolytic Cu foil) having a thickness of 1 µm or more and 1 mm or less, with a solvent containing sulfamic acid.

Next, the separator 140 with the configuration described above is prepared. The separator 140 may be produced using any method common in the art, or a commercially available one may be used. The electrolytic solution may be prepared by dissolving the above-described electrolyte (typically, a lithium salt) in the above-described solvent.

The positive electrode current collector 110 on which the positive electrode 120 is formed, the separator 140, and the negative electrode 130 described above are laminated in this order to obtain a laminate as shown in Fig. 1. The laminate obtained as described above is then sealed in a sealed container together with the electrolytic solution to obtain the lithium secondary battery 100. There are no particular restrictions on the sealed container. Examples of the sealed container include a laminated film.

In the present specification, "the energy density is high" and "high energy density" mean the capacity is high relative to the total volume or total mass of the battery. This is preferably 800 Wh/L or more or 350 Wh/kg or more, more preferably 900 Wh/L or more or 400 Wh/kg or more, and even more preferably 1000 Wh/L or more or 450 Wh/kg or more.

In the present specification, "excellent cycle characteristics" means that the rate of decline in battery capacity is low before and after the number of times of charging and discharging cycles that can be expected during normal use. In other words, when comparing a first discharge capacity after initial charging to a discharge capacity after the number of times of charging and discharging cycles that can be expected during normal use, the discharge capacity after the charging and discharging cycles has not declined significantly relative to the first discharge capacity after the initial charging. Here, "the number of times that can be expected during normal use" can be, for example, 20 times, 30 times, 50 times, 70times, 100 times, 300 times, or 500 times, depending on the application for the lithium secondary battery. In addition, the "discharge capacity after the charging and discharging cycles not declining significantly relative to the first discharge capacity after the initial charging" depends on the application for the lithium secondary battery. For example, it may be 60% or more, 65% or more, 70% or more, 75% or more, 80% or more, or 85% or more of the first discharge capacity after the initial charging.

The embodiments described above are provided merely to explain the present invention and are not intended to limit the present invention to the embodiments. Various modifications are possible without departing from the scope and spirit of the present invention. For example, an additional functional layer may be inserted between the laminate of the positive electrode current collector, the positive electrode, the separator, and the negative electrode.

### Examples

The following is a more detailed description of the present invention with reference to examples and comparative examples. The present invention is not limited in any way by these examples.

### [Examples]

A lithium secondary battery was produced as follows.

First, an electrolytic Cu foil having a thickness of 8 µm was washed with a solvent containing sulfamic acid, and then washed with water. Subsequently, the electrolytic Cu foil was immersed in a solution containing 1H-benzotriazole as a negative electrode coating agent, dried, and further washed with water to obtain a Cu foil coated with the negative electrode coating agent. The resulting Cu foil was punched to a predetermined size (45 mm × 45 mm) to obtain a negative electrode.

As a separator, a separator having a thickness of 16 µm and a predetermined size (50 mm × 50 mm), in which both sides of a 12 µm-thick polyethylene microporous film were coated with a 2 µm-thick polyvinylidene fluoride (PVdF), was prepared.

A positive electrode was produced as follows. A mixture of 96 parts by mass LiNi_{0.85}Co_{0.12}Al_{0.03}O₂ positive electrode active material, 2 parts by mass carbon black conductive aid, and 2 parts by mass polyvinylidene fluoride (PVdF) binder was applied to one side of 12 µm-thick Al foil positive electrode current collector, and press-molded. The resulting molded material was punched to a predetermined size (40 mm × 40 mm) to obtain a positive electrode formed on the positive electrode current collector.

LiN(SO₂F)₂ (LiFSI) as a lithium salt was dissolved in a mixed solvent of a fluorine solvent and a non-fluorine solvent to prepare an electrolytic solution including 1.2 M FSI solution. Table 1 shows a matrix of combinations of the fluorine solvent and the non-fluorine solvent. In Examples, as the fluorinated ether solvent, one or two compounds of TTFE, TFEE, the ether compound represented by Chemical Formula (C1) (FIPME), the ether compound represented by Chemical Formula (C2) (FIPFME), the ether compound represented by Chemical Formula (D1) (DEFEOM), and the ether compound represented by Chemical Formula (D2) (DHFPOM) were used. As the non-fluorine solvent, any of 1,2-dimethoxyethane (DME), triethylene glycol dimethyl ether (TGM), 1,2-dimethoxypropane (DMP), diethylene glycol dimethyl ether (DGM), or tetraethylene glycol dimethyl ether (TetGM) was used. The mixing ratio of the fluorine solvent and the non-fluorine solvent was 80:20 in terms of capacity ratio.

The positive electrode current collector on which the positive electrode was formed, the separator, and the negative electrode obtained as described above were laminated in this order such that the positive electrode faced the separator to obtain a laminate. A 100 µm-thick Al terminal and a 100 µm-thick Ni terminal were connected to the positive electrode current collector and the negative electrode by ultrasonic welding, respectively, and then the laminate was inserted into a laminated outer casing. Next, the electrolytic solution prepared as described above was injected into the outer casing. The outer casing was then sealed to obtain a lithium secondary battery.

### [Evaluation of Cycle Characteristics]

The cycle characteristics of the lithium secondary batteries produced in the examples were evaluated as follows.

With respect to the produced lithium secondary battery (cell at 25°C and 32 mAh), a cycle of CC-charging at a charging rate of 0.1 C and then CC-discharging at a discharging rate of 0.3 C was repeated at a temperature of 25°C. For the examples, the number of cycles (referred to as "Number of cycles" in the table) when the discharge capacity reached 80% of the initial capacity is shown in Table 1. In Table 1, when the mixed solvent was used, the proportion (capacity ratio) of the solvents in the mixed solvent is specified in parentheses (for example, 50/50).

**[Table 1]**

| | | Fluorine solvent | | | | | |
|---|---|---|---|---|---|---|---|
| | | FIPME | FIPFME | DTFEOM | DHFPOM | TTFE | TFEE |
| Non-fluorine solvent | DME | 162 | 163 | 162 | 165 | 181 | 179 |
| | TGM | 144 | 147 | 141 | 143 | 172 | 170 |
| | DMP | 167 | 169 | 171 | 174 | 185 | 183 |
| | TetGM | 141 | 139 | 134 | 141 | 169 | 166 |

In Table 1, the cycle characteristics of lithium secondary batteries including each of 24 kinds of electrolytic solutions obtained by combining 6 kinds of the fluorine solvents and 4 kinds of the non-fluorine solvents are shown. For example, cycle characteristics of a lithium secondary battery, in which an electrolytic solution containing a mixed solvent of DTFEOM as the fluorine solvent and DME as the non-fluorine solvent was used, was 162 times.

Next, electrolytic solutions were prepared by using a mixed solvent that contained a mixture of the fluorinated ether solvent and other fluorine solvents and contained a mixture of the non-fluorine solvents, and the cycle characteristics of lithium secondary batteries with these electrolytic solutions were evaluated in the same manner as described above. Table 2 shows the evaluation results of the cycle characteristics. As the fluorine solvent to be mixed with the fluorinated ether solvent, 1,1,2,2-tetrafluoroethyl-2,2,3,3-tetrafluoropropyl ether (TTFE, corresponding to the fluorine solvent AB) or 1,1,2,2-tetrafluoroethyl-2,2,2-trifluoroethyl ether (TFEE, corresponding to the fluorine solvent A) was used. In Tables 2 and 3, same as in Table 1, the proportion (capacity ratio) of the solvents in the mixed solvent are specified in parentheses.

**[Table 2]**

| | | Mixed system of fluorinated ether solvents | | | | |
|---|---|---|---|---|---|---|
| | | FIPME/TTFE (50/50) | FIPFME/TTFE (50/50) | DTFEOM/TTFE (50/50) | DHFPOM/TTFE (50/50) | FIPME/TFEE (50/50) |
| Mixed system of non-fluorine solvents | DGM/DME (20/80) | 192 | 199 | 194 | 196 | 198 |
| | TGM/DME (20/80) | 189 | 196 | 192 | 193 | 194 |
| | DMP/DME (20/80) | 197 | 201 | 198 | 199 | 202 |
| | TetGM/DME (20/80) | 193 | 197 | 193 | 194 | 196 |

**[Table 3]**

| | | Mixed system of fluorinated ether solvents | | | | |
|---|---|---|---|---|---|---|
| | | FIPFME/TFEE (50/50) | DTFEOM/TFEE (50/50) | DHFPOM/TFEE (50/50) | FIPME/TFEE (95/5) | FIPME/TFEE (20/80) |
| Mixed system of non-fluorine solvents | DGM/DME (20/80) | 202 | 199 | 197 | 159 | 161 |
| | TGM/DME (20/80) | 197 | 192 | 189 | 144 | 154 |
| | DMP/DME (20/80) | 203 | 201 | 202 | 168 | 177 |
| | TetGM/DME (20/80) | 196 | 191 | 192 | 138 | 146 |

In Tables 2 and 3, the cycle characteristics of lithium secondary batteries including each of 40 kinds of electrolytic solutions obtained by combining 10 kinds of mixed solvents of the fluorine solvents and 4 kinds of mixed solvents of the non-fluorine solvents are shown.

### [Comparative Examples]

As Comparative Example 1, a lithium secondary battery was produced in the same manner as in Examples, except that LiPF₆ as a lithium salt was dissolved in a mixed solvent of ethylene carbonate (EC)/ethyl methyl carbonate (EMC) (30% by volume/70% by volume), and an electrolytic solution containing 1 M LiPF₆ solution was used, and the cycle characteristics of the lithium secondary battery was evaluated.

As Comparative Example 2, a lithium secondary battery was produced in the same manner as in Examples, except that LiN(SO₂F)₂ (LiFSI) as a lithium salt was dissolved in a solvent of 1,2-dimethoxyethane (DME), and an electrolytic solution containing 5 M LiFSI solution was used, and the cycle characteristics of the lithium secondary battery was evaluated.

The evaluation results of Comparative Examples 1 and 2 are shown below.

**[Table 4]**

| | Composition | Cycle characteristics |
|---|---|---|
| Comparative Example 1 | 1 M LiPF6, EC/EMC (30/70) | 2 |
| Comparative Example 2 | 5 M LiFSI, DME | 32 |

As shown in Tables 1 to 4, the cycle characteristics in each example could be improved as compared with the cycle characteristics in the comparative examples. In addition, by using the mixed system of the non-fluorine solvents and the mixed system of the fluorinated ether solvents as shown in Tables 2 and 3, the cycle characteristics were further improved.

### Industrial Applicability

Because the lithium secondary battery of the present invention has high energy density and excellent cycle characteristics, it has industrial applicability as a power storage device used in various applications.

### Reference Signs List

- 100, 200, 300: lithium secondary battery
- 110: positive electrode current collector
- 120: positive electrode
- 130: negative electrode
- 140: separator
- 210: negative electrode terminal
- 220: positive electrode terminal

## Claims

1. A lithium secondary battery comprising: a positive electrode; a separator; a negative electrode that is free of a negative electrode active material; and an electrolytic solution,
wherein the electrolytic solution contains one or more fluorine solvents selected from ether compounds represented by Chemical Formulae (A) to (D), 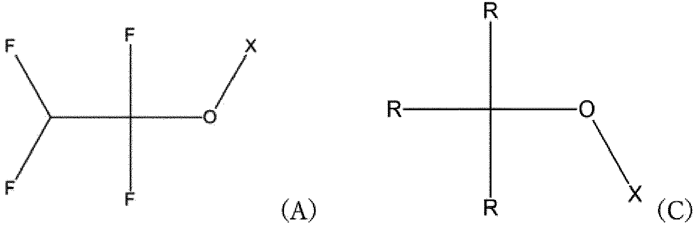 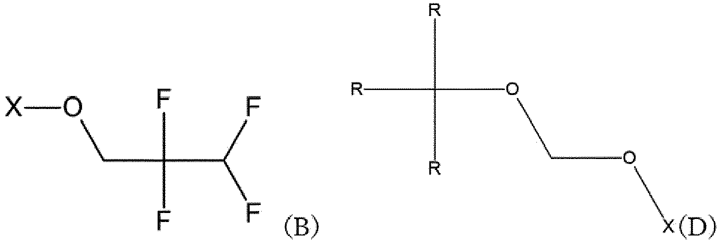
(in the formulae, each R independently represents any of H, F, or a fluorinated alkyl group having 1 to 3 carbon atoms, that is fully or partially fluorinated, and X represents a monovalent group).

2. The lithium secondary battery according to claim 1, wherein X represents an alkyl group having 1 to 7 carbon atoms or a fluorinated alkyl group having 1 to 7 carbon atoms, that is fully or partially fluorinated.

3. The lithium secondary battery according to claim 1 or 2, wherein the electrolytic solution contains two or more types of the fluorine solvents selected from the ether compounds represented by Chemical Formulae (A) to (D).

4. The lithium secondary battery according to any one of claims 1 to 3, wherein the electrolytic solution contains one or more non-fluorine solvents that are ether compounds free of a fluorine atom.

5. The lithium secondary battery according to any one of claims 1 to 4, wherein the electrolytic solution contains two or more types of non-fluorine solvents that are ether compounds free of a fluorine atom.

6. The lithium secondary battery according to claim 4 or 5, wherein the ether compound free of a fluorine atom is a compound that includes 2 or more and 5 or less ether bonds.

7. The lithium secondary battery according to any one of claims 1 to 6, wherein the electrolytic solution contains LiN(SO₂F)₂ as a lithium salt.

8. The lithium secondary battery according to any one of claims 1 to 7, wherein a total amount of the fluorine solvents is 20% by volume or more relative to an overall amount of solvent components in the electrolytic solution.

9. The lithium secondary battery according to claim 8, wherein the total amount of the fluorine solvents is 50% by volume or more relative to the overall amount of the solvent components in the electrolytic solution.

10. The lithium secondary battery according to any one of claims 4 to 6, wherein an amount of the non-fluorine solvents is 10% by volume or more and 50% by volume or less relative to an overall amount of solvent components in the electrolytic solution.
